# EUROPEAN PATENT SPECIFICATION

(11) **EP 3 683 401 B1**
(45) Date of publication and mention of the grant of the patent: **29.03.2023**
(21) Application number: 19209578.4
(22) Date of filing: 15.11.2019
(51) Int. Cl.: F01D 5/14, F04D 21/00, F01D 9/04

(54) **AIRFOILS WITH RECESSED SURFACES**
SCHAUFELN MIT VERTIEFTEN OBERFLÄCHEN
PALES DOTÉES DE SURFACES EN RETRAIT

(30) Priority: 18.01.2019 US 201916251219
(43) Date of publication of application: 22.07.2020
(73) Proprietor: Raytheon Technologies Corporation, Farmington, CT 06032 (US)
(72) Inventor: CHUANG, Sue-Li, Glastonbury, CT Connecticut 06033 (US); WHELAN, John Logan, Berlin, CT Connecticut 06037 (US); STEPHENS, Mark A., Wethersfield, CT Connecticut 06109 (US); CLARK, Kenneth P., Glastonbury, CT Connecticut 06033 (US); JOSEPH, Liselle A., Glastonbury, CT Connecticut 06033 (US); ELEY, James A., Stuart, FL Florida 34994 (US)
(74) Representative: Dehns

(56) References cited:
- EP-A1- 2 907 972
- EP-A2- 1 126 132
- EP-A2- 1 152 122
- DE-B3-102004 009 696
- US-A1- 2002 085 918
- US-A1- 2005 214 113

## Description

### BACKGROUND

The subject matter disclosed herein generally relates to gas turbine engines and, more particularly, to an apparatus for improving the flow capacity by introducing the additional geometry design parameters of recesses on blades or vanes of gas turbine engines during transonic flow.

High performance with supersonic airfoils of a gas turbine engine is often challenging due to the presence of a strong shock inside the passage of two adjoining airfoils, which is referred to as a passage shock. Passage shocks may form proximate a throat between two adjacent blades or stator vanes as air flowing through a gas turbine engine between the two adjacent blades or stator vanes increases in velocity and turns transonic. The throat may be the aerodynamic throat or geometric throat between two adjacent blades or stator vanes. The shock waves may tend to impede air flowing through the throat between the two adjacent blades or stator vanes. The passage shock may incur high losses and limits increases in flow capacity.

EP 1126132 A2 discloses a compressor flowpath comprising an outer wall which bridges airfoil outer ends and an inner wall bridging the airfoil inner ends, and wherein one of the walls includes a flute adjacent the leading edge of the airfoil. DE102004009696 B3 and US 2002/085918 A1 disclose turbine airfoils having, on the pressure side, a curvature inflection point behind the 80% position from leading edge to trailing edge at which the curvature value changes from negative to positive.

EP 2907972 A1 discloses transonic turbomachinery blades having local positive camber at regions predicted to have supersonic flow.

US 2005/214113 A1 discloses compressor blades having a flow transition fixation mechanism provided on the suction side and upstream of compression shocks acting upon the blade.

EP 1152122 A1 discloses turbomachinery blades having on the suction surface a contour featuring chordwisely separated, positively curved forward and aft segments, and a negatively curved medial segment.

### SUMMARY

According to one embodiment, a component system of a gas turbine engine is provided as described by claim 1.

The second component may further comprise a pressure side at the air passage and a suction side opposite the pressure side, wherein the second recess is located in the outer surface of the second component at the air passage on the pressure side of the second component.

The second component may further comprise a pressure side at the air passage and a suction side opposite the pressure side, wherein the first recess is located in the outer surface of the second component at the air passage on the pressure side of the second component.

The first recess may stretch at least partially across a span of the first component.

A second recess may be located in the outer surface of the second component at the air passage, wherein the second recess is located at the throat within the air passageway stretching between the first component and the second component.

The second recess may stretch at least partially across a span of the second component.

According to another embodiment, a gas turbine engine is provided as described by claim 7.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION

The following descriptions are provided by way of example only and should not be considered limiting in any way. With reference to the accompanying drawings, like elements are numbered alike:
FIG. 1 is a partial cross-sectional illustration of a gas turbine engine;
FIG. 2 is a cross-sectional side view of two adjacent blades of the gas turbine engine of FIG. 1 with one blade having a recess;
FIG. 3 is a cross-sectional side view of two adjacent blades of the gas turbine engine of FIG. 1 with two blades having a recess;
FIG. 4 is a cross-sectional side view of two adjacent blades of the gas turbine engine of FIG. 1 with one blade having a recess;
FIG. 5 is a cross-sectional planform view of one blade of the gas turbine engine of FIG. 1 having a recess; and
FIG. 6 is a cross-sectional side view of two adjacent blades of the gas turbine engine of FIG. 1 with one blade having a recess.

The detailed description explains embodiments of the present disclosure, together with advantages and features, by way of example with reference to the drawings.

### DETAILED DESCRIPTION

A detailed description of one or more embodiments of the disclosed apparatus and method are presented herein by way of exemplification and not limitation with reference to the Figures.

Passage shocks may form proximate a throat between two adjacent blades or stator vanes as air flowing through a gas turbine engine between the two adjacent blades or stator vanes increases in velocity and turns transonic. The throat may be the aerodynamic throat or geometric throat between two adjacent blades or stator vanes. The shock waves may tend to impede air flowing through the throat between the two adjacent blades or stator vanes. The passage shock may incur high losses and limits increases in flow capacity. Inlet conditions to the airfoil such as Mach number, air angle and airfoil geometry determines and control the strength and location of this passage shock. This passage shock will also vary along the airfoil surface depending on the operating flight condition. Specific goals for an airfoil design such as reducing losses, increasing operating range or increasing flow capacity are typical objectives that can be in conflict with one another. Targeting the airfoil design to meeting one of these goals will end up having an optimized shape that may be unique for that condition at the expense of the others. The embodiments disclosed herein seek to address these issues by manipulating the shape along the surface of the airfoil at different locations in effect optimizing for each specific goal.

Embodiments disclosed herein include apparatuses and methods to reduce, delay, and/or eliminate the shock waves forming between two adjacent blades of a gas turbine engine. Advantageously, by placing a recess (i.e., indentation or groove) in the blade proximate the throat where the shock wave is predicted to form, the shockwave may be reduced, delayed, and/or eliminated because the recess expands the through as discussed further herein.

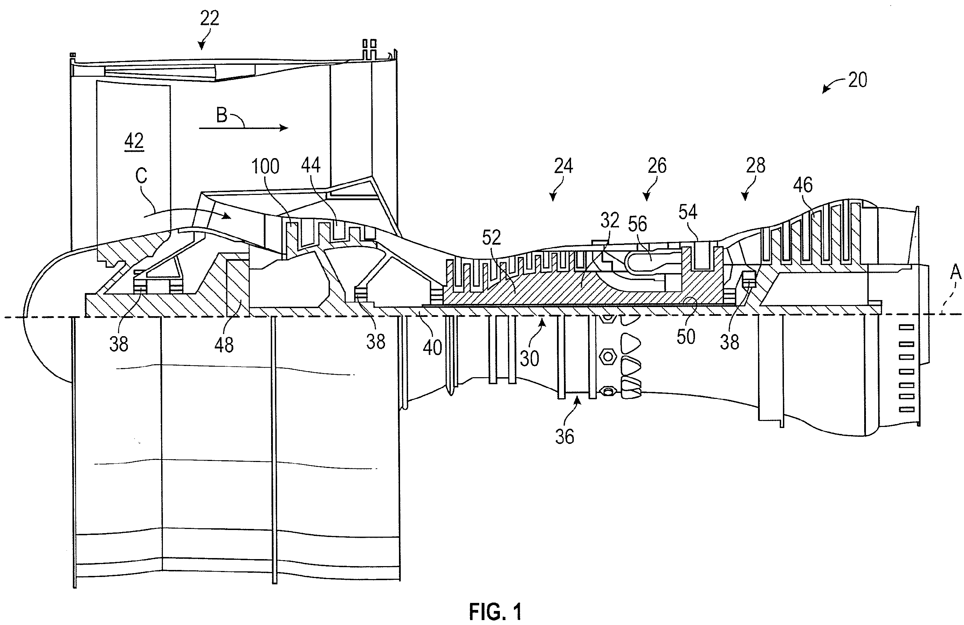

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct, while the compressor section 24 drives air along a core flow path C for compression and communication into the combustor section 26 then expansion through the turbine section 28. The compressor section 24 and the turbine section 28 each include fan blades 100. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicyclic gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8 Mach and about 35,000 feet (10,668 meters). The flight condition of 0.8 Mach and 35,000 ft (10,668 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

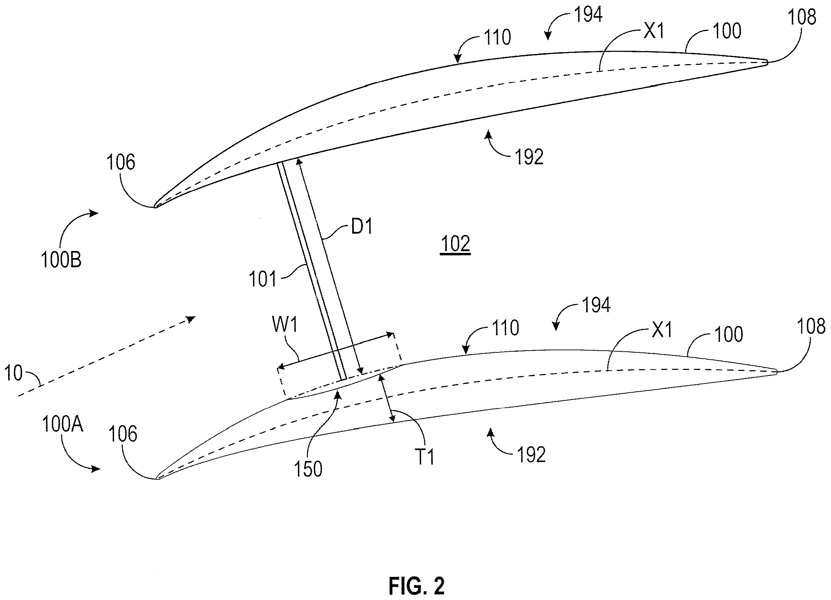

Referring now to FIGs. 2-4, with continued reference to FIG. 1, two adjacent blades 100 are illustrated. The two blades 100 may be referred to as a first blade 100a and a second blade 100b. The blades 100 may be blades of a fan section 22, compressor section 24, and/or a turbine section 28. It is understood that while the embodiments disclosed herein are discussed in relation to blades of a gas turbine engine 20, the embodiments disclosed herein may also be applicable to other component systems having adjacent components with air flowing therebetween within a gas turbine engine, such as, for example, stator vanes.

Each of the blades 100 includes a leading edge 106 and a trailing edge 108 opposite the leading edge 106 of the blade 100. The blade 100 spans from the leading edge 106 to the trailing edge 108 along the chord X1 of the blade 100. The blade 100 may have an airfoil shape, as shown in FIGs. 2-4. Each blade 100 also includes a pressure side 192 and a suction side 194. An outer surface 110 of the blade 100 defines the shape of the blade 100. For example, the outer surface 110 may be approximately concave in shape on the pressure side 192 and approximately convex in shape on the suction side 194.

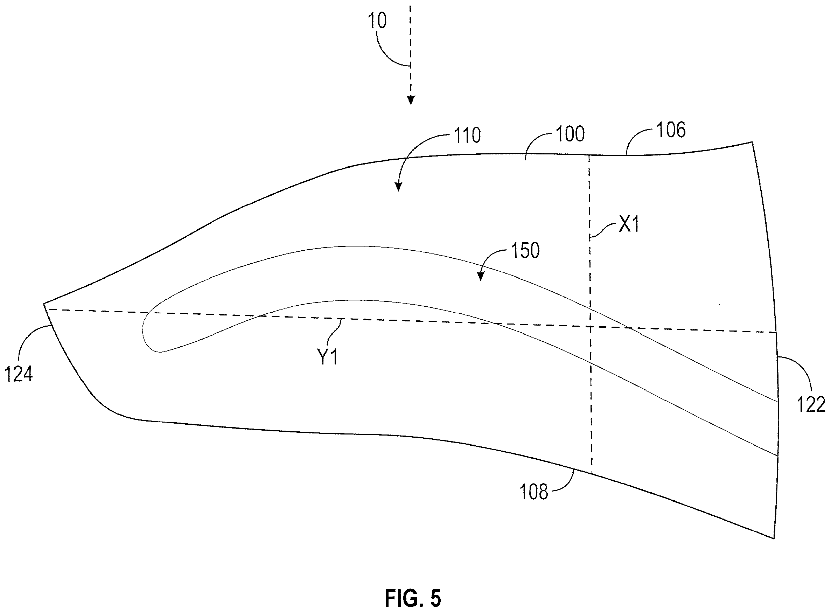

The blades 100 are in a facing spaced relationship forming an air passage 102 therebetween. The two adjacent blades 100 are separated by a distance D1 defining the size of the air passage 102. The distance D1 (i.e., size of the air passage) varies in size along the chord X1 from the leading edge 106 of the blade 100 to the trailing edge 108 of the blade 100. The distance D1 (i.e., size of the air passage) also varies in size along the span Y1 from the root 122 of the blade 100 to the tip 124 of the blade 100 (see FIG. 5). Air 10 flows through the air passage 102 during operation of the gas turbine engine 20.

The air passage 102 includes a throat 101. The throat 101 is located where the blades 100 are closest together along the chord X1 and the span Y1 (i.e., where the distance D1 is at a minimum). Passage shock waves begin to form proximate the throat 101 between the two adjacent blades 100 as air 10 flowing through a gas turbine engine 20 between the two adjacent blades 100 increases in velocity and turns transonic. The shock waves may tend to impede air 10 flowing through the throat 101 between the two adjacent blades 100.

Both of the blades 100 include a recess 150 in the outer surface 110 of blade 100 proximate the throat 101 and proximate the air passageway 102. There may be one or more recesses 150 along the chord X1 of the blade 100. The recess 150 is located proximate the throat 101 within the air passageway 102 stretching between the first blade 101a and the second blade 101b. The recess 150 is recessed inward into the blade 100 relative to the outer surface 110 of the blade 100. The recess 150 may extend a width W1 over the outer surface 110 of the blade 100. The width W1 of the recess 150 may be measured along the chord X1 of the blade 100. The width W1 of the recess 150 may vary of the span Y1 (see FIG. 5) of the blade 100. The recess 150 may be filleted, rounded, smooth, and/or curved so as not to impede the air 10 flow through the air passage 10, as shown in FIGs. 2-3. The recess 150 expands the throat 101 and eliminates, reduces the strength of, and/or delays the formation of a shock wave at the throat 101 within the air passageway 102, thus increasing the flow capacity of air 10 through the air passage. In other words, the recess 150 locally reduces the thickness T1 of the at least one of the two adjacent blades 100 proximate the throat 101.

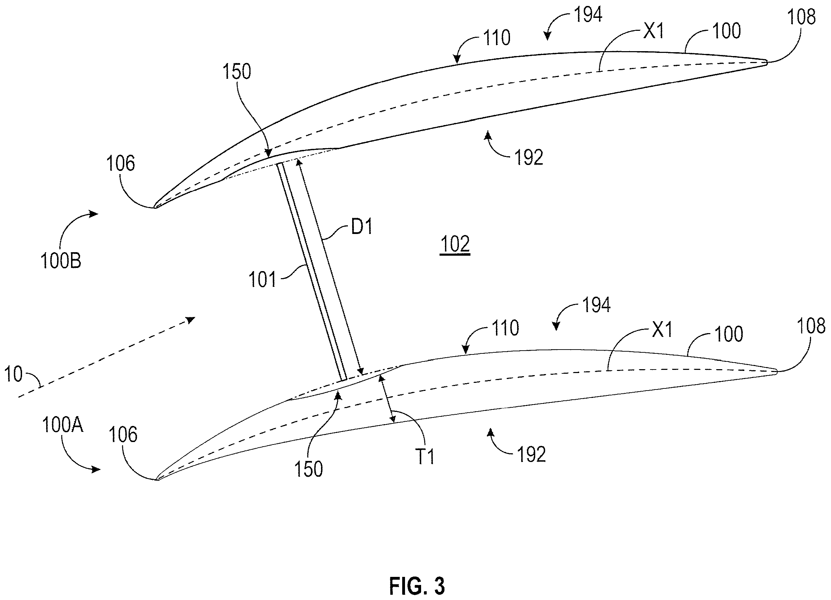

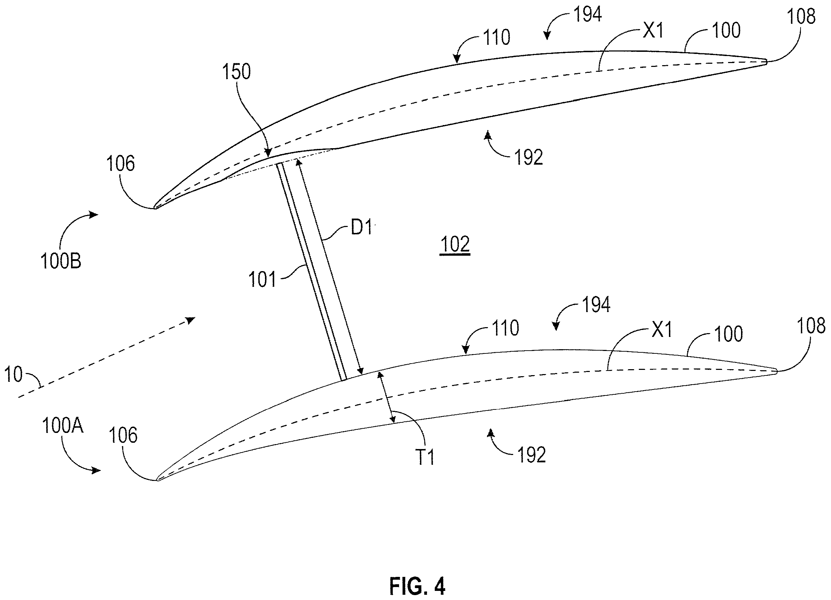

In the example illustrated in FIG. 2, the first blade 100a includes a recess 150 located on the outer surface 110 of the first blade 100a adjacent to the air passage 102. The recess 150, shown in FIG. 2, is located on the suction side 194 of the first blade 100a. In the example illustrated in FIG. 3, the first blade 100a includes a recess 150 located on the outer surface 110 of the first blade 100a adjacent to the air passage 102 and the second blade 100b includes a recess 150 located on the outer surface 110 of the second blade 100b adjacent the air passage 102. The recess 150 of the first blade 100a, shown in FIG. 3, is located on the suction side 194 of the first blade 100a and the recess 150 of the second blade 100b is located on the pressure side 192 of the second blade 100b. In the example illustrated in FIG. 4, the second blade 100b includes a recess 150 located on the outer surface 110 of the second blade 100b adjacent the air passage 102. The recess 150 of the second blade 100b, shown in FIG. 4, is located on the pressure side 192 of the second blade 100b.

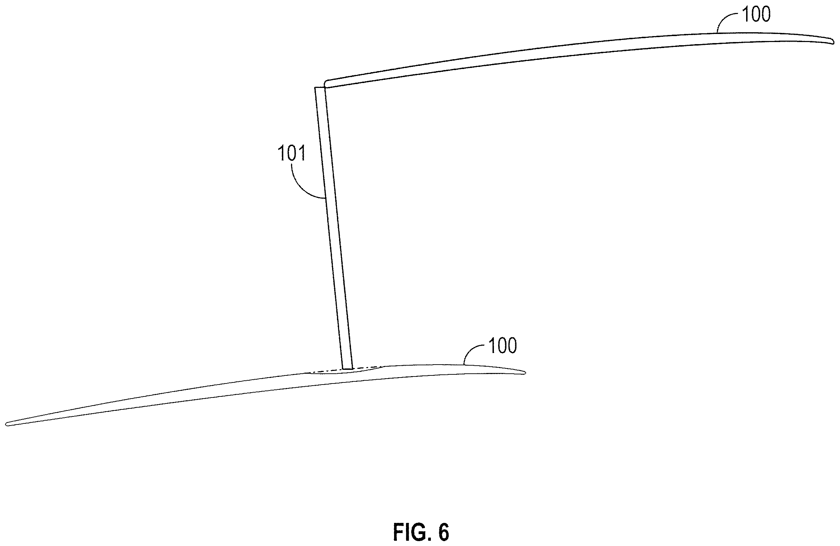

Referring now to FIGs. 5 and 6, with continued reference to FIGs. 1-4, a planform view of a blade 100 is illustrated in FIG. 5. FIG. 5 shows that the recess 150 may stretch at least partially across the span Y1 of the blade 100 from the root 122 of the blade 100 to the tip 124 of the blade 100. The location of the throat 101 may shift along the span Y1 of the blade 100 due to the geometric and/or aerodynamic throats of the two adjacent blades, thus the location of the recess 150 along the chord X1 may vary along the span Y1 of the blade 100, as shown in FIG. 5. For example, FIGs. 1-4, may represent the location of the throat 101 between two adjacent blades 100 proximate the root 122 in a subsonic or transonic flow condition and FIG. 6 may represent the location of the throat 101 between two adjacent blades 100 proximate the tip 124 in a supersonic flow condition. The curvature of the recess 150 along the span Y1 of the blade 100 may be specific to the geometric of the two adjacent blades 100 and the desired speed at which to reduce the effects of a shock wave at the throat 101 between the two adjacent blades 100. The span Y1 is about perpendicular to the chord X1. The span Y1 is also about perpendicular to the flow of air 10 through the air 10 passage 102. Multiple grooves on each surface can be constructed based on the locations of the aerodynamic throats arise at given design conditions.

Technical effects of embodiments of the present disclosure include locally recessing a surface of two adjacent blades proximate a throat between the two adjacent blades to reduce and/or eliminate shockwave formation proximate the throat.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof.

Therefore, it is intended that the present disclosure not be limited to the particular embodiment disclosed as the best mode contemplated for carrying out this present disclosure, but that the present disclosure will include all embodiments falling within the scope of the claims.

## Claims

1. A component system of a gas turbine engine (20), comprising:
a first component (100A) having an outer surface (110);
a second component (100B) having an outer surface (110), the second component and the first component being in a facing spaced relationship defining an air passageway (102) therebetween, wherein the first component (100A) and the second component (100B) are blades (100) or stator vanes; and
a first recess (150) located in at least one of the outer surface of the first component at the air passage and the outer surface of the second component at the air passage, wherein the first recess is located at a throat (101) within the air passageway stretching between the first component and the second component,
wherein the first component (100A) further includes a suction side (194) at the air passage (102) and a pressure side (192) opposite the suction side, the first recess (150) being located in the outer surface (110) of the first component (100A) at the air passage (102) on the suction side of the first component, and
**characterized in that**:
the component system further comprises: a second recess (150) located in the outer surface (110) of the second component (100B) at the air passage, wherein the second recess is located at the throat within the air passageway stretching between the first component and the second component.

2. The component system of claim 1, wherein the second component (100B) further comprises a pressure side (192) at the air passage and a suction side (194) opposite the pressure side, and
wherein the second recess (150) is located in the outer surface (110) of the second component at the air passage on the pressure side of the second component.

3. The component system of claim 1, wherein the second component (110B) further comprises a pressure side (192) at the air passage (102) and a suction side (194) opposite the pressure side, wherein another first recess (150) is located in the outer surface (110) of the second component at the air passage on the pressure side of the second component.

4. The component system of claim 1, wherein the first recess stretches at least partially across a span of the first component.

5. The component system of claim 4, further comprising:
a second recess (150) located in the outer surface (110) of the second component (100B) at the air passage (102), wherein the second recess is located at the throat (101) within the air passageway stretching between the first component (100A) and the second component (100B).

6. The component system of claim 5, wherein the second recess (150) stretches at least partially across a span of the second component (100B).

7. A gas turbine engine (20) comprising:
a fan section (22);
a compressor section (24);
a turbine section (28); and
a component system of any of claims 1 to 6 located within at least one of the fan section, the compressor section, and the turbine section.

## Patentansprüche

1. Komponentensystem eines Gasturbinentriebwerks (20), umfassend:
eine erste Komponente (100A) mit einer äußeren Oberfläche (110) eine zweite Komponente (100B) mit einer äußeren Oberfläche (110), wobei die zweite Komponente und die erste Komponente in einer einander zugewandten beabstandeten Beziehung sind, die
einen Luftdurchgang (102) dazwischen definiert, wobei die erste Komponente (100A) und die zweite Komponente (100B) Laufschaufeln (100) oder Statorleitschaufeln sind; und
eine erste Vertiefung (150), die sich in zumindest einer von der äußeren Oberfläche der ersten Komponente an dem Luftdurchgang und der äußeren Oberfläche der zweiten Komponente an dem Luftdurchgang befindet, wobei sich die erste Vertiefung an einer Verengung (101) innerhalb des Luftdurchgangs befindet, der sich zwischen der ersten Komponente und der zweiten Komponente erstreckt,
wobei die erste Komponente (100A) ferner eine Saugseite (194) an dem Luftdurchgang (102) und eine Druckseite (192) gegenüber der Saugseite beinhaltet, wobei sich die erste Vertiefung (150) in der äußeren Oberfläche (110) der ersten Komponente (100A) an dem Luftdurchgang (102) auf der Saugseite der ersten Komponente befindet, und
**dadurch gekennzeichnet, dass**:
das Komponentensystem ferner Folgendes umfasst: eine zweite Vertiefung (150), die sich in der äußeren Oberfläche (110) der zweiten Komponente (100B) an dem Luftdurchgang befindet, wobei sich die zweite Vertiefung an der Verengung innerhalb des Luftdurchgangs befindet, der sich zwischen der ersten Komponente und der zweiten Komponente erstreckt.

2. Komponentensystem nach Anspruch 1, wobei die zweite Komponente (100B) ferner eine Druckseite (192) an dem Luftdurchgang und eine Saugseite (194) gegenüber der Druckseite umfasst, und
wobei sich die zweite Vertiefung (150) in der äußeren Oberfläche (110) der zweiten Komponente an dem Luftdurchgang auf der Druckseite der zweiten Komponente befindet.

3. Komponentensystem nach Anspruch 1, wobei die zweite Komponente (110B) ferner eine Druckseite (192) an dem Luftdurchgang (102) und eine Saugseite (194) gegenüber der Druckseite umfasst,
wobei sich eine weitere erste Vertiefung (150) in der äußeren Oberfläche (110) der zweiten Komponente an dem Luftdurchgang auf der Druckseite der zweiten Komponente befindet.

4. Komponentensystem nach Anspruch 1, wobei sich die erste Vertiefung zumindest teilweise über eine Spannweite der ersten Komponente erstreckt.

5. Komponentensystem nach Anspruch 4, ferner umfassend:
eine zweite Vertiefung (150), die sich in der äußeren Oberfläche (110) der zweiten Komponente (100B) an dem Luftdurchgang (102) befindet, wobei sich die zweite Vertiefung an der Verengung (101) innerhalb des Luftdurchgangs befindet, der sich zwischen der ersten Komponente (100A) und der zweiten Komponente (100B) erstreckt.

6. Komponentensystem nach Anspruch 5, wobei sich die zweite Vertiefung (150) zumindest teilweise über eine Spannweite der zweiten Komponente (100B) erstreckt.

7. Gasturbinentriebwerk (20), umfassend:
einen Gebläseabschnitt (22);
einen Verdichterabschnitt (24);
einen Turbinenabschnitt (28); und
ein Komponentensystem nach einem der Ansprüche 1 bis 6, das sich in zumindest einem von dem Gebläseabschnitt, dem Verdichterabschnitt und dem Turbinenabschnitt befindet.

## Revendications

1. Système de composants d'un moteur à turbine à gaz (20) comprenant :
un premier composant (100A) ayant une surface externe (110) ;
un second composant (100B) ayant une surface externe (110), le second composant et le premier composant étant dans une relation espacée face à face définissant un passage d'air (102) entre eux, dans lequel le premier composant (100A) et le second composant (100B) sont des pales (100) ou des aubes de stator ; et
un premier évidement (150) situé dans au moins l'une parmi la surface externe du premier composant au niveau du passage d'air et la surface externe du second composant au niveau du passage d'air, dans lequel le premier évidement est situé au niveau d'une gorge (101) à l'intérieur du passage d'air s'étendant entre le premier composant et le second composant,
dans lequel le premier composant (100A) comporte en outre un côté aspiration (194) au niveau du passage d'air (102) et un côté pression (192) opposé au côté aspiration, le premier évidement (150) étant situé dans la surface externe (110) du premier composant (100A) au niveau du passage d'air (102) sur le côté aspiration du premier composant, et
**caractérisé en ce que** :
le système de composants comprend en outre : un second évidement (150) situé dans la surface externe (110) du second composant (100B) au niveau du passage d'air, dans lequel le second évidement est situé au niveau de la gorge à l'intérieur du passage d'air s'étendant entre le premier composant et le second composant.

2. Système de composants selon la revendication 1, dans lequel le second composant (100B) comprend en outre un côté pression (192) au niveau du passage d'air et un côté aspiration (194) opposé au côté pression, et
dans lequel le second évidement (150) est situé dans la surface externe (110) du second composant au niveau du passage d'air sur le côté pression du second composant.

3. Système de composants selon la revendication 1, dans lequel le second composant (110B) comprend en outre un côté pression (192) au niveau du passage d'air (102) et un côté aspiration (194) opposé au côté pression,
dans lequel un autre premier évidement (150) est situé dans la surface externe (110) du second composant au niveau du passage d'air sur le côté pression du second composant.

4. Système de composants selon la revendication 1, dans lequel le premier évidement s'étend au moins partiellement sur une étendue du premier composant.

5. Système de composants selon la revendication 4, comprenant en outre :
un second évidement (150) situé dans la surface externe (110) du second composant (100B) au niveau du passage d'air (102), dans lequel le second évidement est situé au niveau de la gorge (101) à l'intérieur du passage d'air s'étendant entre le premier composant (100A) et le second composant (100B).

6. Système de composants selon la revendication 5, dans lequel le second évidement (150) s'étend au moins partiellement sur une étendue du second composant (100B).

7. Moteur à turbine à gaz (20) comprenant :
une section de soufflante (22) ;
une section de compresseur (24) ;
une section de turbine (28) ; et
un système de composants selon l'une quelconque des revendications 1 à 6 situé dans au moins l'une parmi la section de soufflante, la section de compresseur et la section de turbine.
